# EUROPÄISCHE PATENTSCHRIFT

(11) **EP 3 537 109 B1**
(45) Veröffentlichungstag und Bekanntmachung des Hinweises auf die Patenterteilung: **22.01.2020**
(21) Anmeldenummer: 18160533.8
(22) Anmeldetag: 07.03.2018
(51) Int. Cl.: H04L 29/06, G01D 4/00, H04L 1/00

(54) **VERFAHREN ZUR MESSWERTERFASSUNG**
DATA ACQUISITION METHOD
PROCÉDÉ DE SAISIE DE VALEURS MESURÉES

(43) Veröffentlichungstag der Anmeldung: 11.09.2019
(73) Patentinhaber: HAUSHELD Aktiengesellschaft, 41061 Mönchengladbach (DE)
(72) Erfinder: Stoffelsma, Bouke, 41239 Mönchengladbach (DE)
(74) Vertreter: Hauck Patentanwaltspartnerschaft mbB

(56) Entgegenhaltungen:
- EP-A2- 2 088 706
- WO-A1-2018/007417
- US-A1- 2015 084 547

## Beschreibung

Die vorliegende Erfindung betrifft ein Verfahren zur Messwerterfassung in einem Messsystem mit einer Vielzahl von Zählern und Kommunikationsadaptern. Die Messwerte werden in einzelnen Messgeräten aufgenommen. Messwerte im Sinne der vorliegenden Erfindung sind beispielsweise physikalische Größen wie Spannung, Stromstärke, Volumen, Druck, Durchflussmenge/-geschwindigkeit, Temperatur oder andere zähl- und messbare Größen. Die Messwerte können aktuell als momentan vorliegende Messwerte erfasst oder als über die Zeit akkumulierte Messwerte aufgefasst werden. Die Messwerte werden grundsätzlich von Messeinrichtungen erfasst, die nachfolgend auch als Zähler bezeichnet werden. Kommunikationsadapter sind dabei Einrichtungen, mit denen ein oder mehrere Zähler ihre aktuellen Messwerte für eine Übertragung weitergeben und -leiten können.

Mit dem Einzug digitaler Übertragungs- und Messverfahren in das Messwesen werden Messwerte heute auch mit Hilfe von aufwendigen Verschlüsselungsverfahren gegen Manipulationen, fremden Zugriff und Fehler bei der Übertragung gesichert. Die übertragenen Messwerte werden von einer Auswerteeinheit empfangen, die zugleich auch die Aufgabe hat, die Integrität der Messdaten aufgrund der vorgenommenen Verschlüsselung zu überprüfen. Der Vorgang zur Überprüfung der Integrität von empfangenen Daten wird nachfolgend auch als Authentifizierung der Daten bezeichnet.

Neben den eigentlichen Messdaten, die sich jeweils auf eine erfasste physikalische Einheit beziehen, werden auch zahlreiche zusätzliche Informationen, wie Signaturen, Prüfsummen oder öffentliche Schlüssel mit übertragen, die zur Sicherung der Integrität der Messdaten benötigt werden. Die empfangene Auswerteeinheit wird dadurch in die Lage versetzt, die Messwerte dahingehend zu überprüfen, ob sie von einem bestimmten Messgerät stammen und ob die Messwerte verändert wurden. Zur Kennzeichnung der Messung kann in der Regel auf den Messwert und auf den Messzeitpunkt, zu dem die Messung durchgeführt wurde, zurückgegriffen werden. Um Synchronisationsprobleme in einem solchen Messsystem mit verschiedenen Uhren zu vermeiden, sind die Zähler selbst nicht mit Uhren ausgestattet. Stattdessen wird eine hochgenaue Uhr in der Auswerteeinheit genutzt. Im Grundansatz wird der Zeitpunkt, in dem das Messgerät aufgefordert wurde, Messwerte zu senden, durch die Auswerteeinheit protokolliert. Aus dem Zeitpunkt, in dem der oder die angeforderten Messwerte eingehen, kann auf den Messzeitpunkt zurückgeschlossen werden. In der Anweisung der physikalischtechnischen Bundesanstalt PTB-A50.8 finden sich hierzu Anweisungen und Erläuterungen.

Bei einem Messsystem, das hohe Anforderungen an die Integrität der Datenübermittlung stellt, erhöht sich zugleich auch das zu übertragende Datenvolumen der Messwerte und auch die Dauer für die Datenübertragung, wenn eine Vielzahl von Zählern und Kommunikationsadaptern gleichzeitig zur Übertragung ihrer Messwerte an die Auswerteeinheit aufgefordert werden. Weiter erhöht wird die Übertragungsdauer, wenn das dafür vorhandene Übertragungsmedium nur eine geringe Bandbreite zur Verfügung stellt. Diese Verzögerung der Übertragungsdauer führt dazu, dass die Auswerteeinheit den Sendezeitpunkt der Messwerte immer schlechter und unzureichender bestimmen kann. In der praktischen Anwendung tritt erschwerend hinzu, dass sehr viele Messwerte gleichzeitig zu einem Stichtag oder einem Stichzeitpunkt ermittelt und übertragen werden sollen. Aus abrechnungstechnischen Gründen sind oft feste Zeiträume für die Abrechnung der auf Basis der Messwerte ermittelten Verbrauchskosten vorgesehen. Beispielsweise kann für ein Messsystem definiert sein, dass jeden Tag zu einer bestimmten Uhrzeit, mit Ablauf eines Monats oder mit Jahreswechsel die Messwerte erfasst werden. Bei hohen Verbräuchen, beispielsweise im produzierenden Gewerbe, kann es erforderlich sein, dass die Zählerstände in 10 oder 15 Minuten Abständen erfasst werden. Auch hier ist es wünschenswert, Messwerte bereitstellen zu können, die verlässlich zu Beginn des jeweiligen Zeitintervalls erfasst wurden.

Für die Abrechnung ist es vielfach auch erforderlich, einen genau festgelegten Zeitraum zwischen zwei Messvorgängen einzuhalten. Üblich bei der Abrechnung von Verbräuchen sind beispielsweise Abstände zwischen der Messung von 365 Tagen, 24 Stunden oder beispielsweise von 15 Minuten. Eine übliche Forderung für derartige Messvorgänge besteht darin, dass der gewählte Messzeitraum nicht um mehr als 1 % schwanken darf, wenn die Messung zur Abrechnung herangezogen werden soll. Je kleiner dabei die gewählte Messperiode ist, desto wichtiger ist es, den absoluten Anfangs- und Endzeitpunkt der Messperiode genau bestimmen zu können.

Für die Übertragung von Informationen sind heute Netzwerke üblich. Die zu übertragene Information wird in einzelne Pakete geteilt, die durch das Kommunikationsnetzwerk weitergereicht werden. Jedes Paket bewegt sich dabei separat durch das Netzwerk, sodass die Nachricht das Netzwerk auf unterschiedlichen physikalischen Routen durchlaufen kann und einzelne Pakete bei Übertragungsstörungen erneut übertragen werden müssen. Auch verlieren die in Pakete verpackten Informationen ihre natürliche Reihenfolge und müssen nach Erhalt in der Auswerteeinheit entsprechend aufgearbeitet bzw. sortiert werden. Mit der Zunahme der Nachrichtenlängen und der Anzahl der gleichzeitig gesendeten Messwerte steigt hier die Verarbeitungsdauer überproportional an und führt dazu, dass Zeitgrenzen bei der Übertragung der Messwerte nicht mehr eingehalten werden können.

Der technische Hintergrund zur Messwerterfassung in einem Messsystem mit einer Vielzahl von Zählern und Kommunikationsadaptern ist in der PTB-A50.8 beschrieben.

Aus US 2015/0084547 A1 ist ein System bekannt geworden, bei dem Lichtsteuersysteme für Haushalte, Büros, gewerbliche Plätze, Parkplätze und den öffentlichen Bereich bereitgestellt werden. Hierbei werden Kurzadressen für die Kommunikation mit den einzelnen Netzwerkeinheiten verwendet.

Das Dokument EP2088706 beschreibt ein Messdatenerfassungssystem, das die verschiedene Übertragungsmodi benutzt, um in Abhängigkeit von gewünschtem Batterieverbrauch, die entsprechende Formaten auszuwählen.

Der Erfindung liegt die Aufgabe zugrunde, ein Verfahren zur Messwerterfassung in einem Messsystem mit einer Vielzahl von Zählern und Kommunikationsadaptern bereitzustellen, das auch bei einem hohen Datenaufkommen eine zuverlässige Erfassung des Messzeitpunkts sicherstellt.

Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren dient zur Messwerterfassung in einem Messsystem mit einer Vielzahl von Zählern und Kommunikationsadaptern, die jeweils einen oder mehrere Messwerte an eine Auswerteeinheit übertragen. Die Auswerteeinheit empfängt jeweils den oder die Messwerte, wertet diese aus und leitet sie entsprechend weiter. Erfindungsgemäß werden die zu übertragenden Messwerte vor einem Sendevorgang in eine Schnellnachricht und in eine gesicherte Nachricht umgesetzt. Die gesicherte Nachricht dient dazu, die schnelle Nachricht und den oder die Messwerte zu authentifizieren. Dies bedeutet, die datentechnische Richtigkeit der Schnellnachricht wird durch die gesicherte Nachricht in überprüfbarer Weise hergestellt. Erfindungsgemäß sind die zu übertragenden Messwerte in der Schnellnachricht und/oder in der gesicherten Nachricht enthalten. Dies bedeutet eine der beiden Nachrichten oder beide Nachrichten gemeinsam lassen es zu, den oder die Messwerte zu bestimmen. Im Rahmen des erfindungsgemäßen Verfahrens wird die Schnellnachricht an die Auswerteeinheit übermittelt und der Empfangszeitpunkt der Schnellnachricht an der Auswerteeinheit gespeichert. Ebenfalls wird die gesicherte Nachricht an die Auswerteeinheit übertragen. Die Schnellnachricht wird mit Hilfe der gesicherten Nachricht authentifiziert, der oder die Messwerte aus der Schnellnachricht und/oder aus der gesicherten Nachricht gewonnen und der Empfangszeitpunkt der Schnellnachricht wird den gewonnenen Messwerten als Empfangszeitort zugeordnet. Dieser Schritt bedeutet, dass - obwohl die gesicherte Nachricht nach der Schnellnachricht eingeht - der Empfangszeitpunkt der Schnellnachricht als Empfangszeitpunkt der Messwerte gesetzt werden kann. Dies hat den Vorteil, dass die Schnellnachrichten zunächst zahlreich über das Netz übertragen werden können, während die mit größerem Datenvolumen versehenen gesicherten Nachrichten nachfolgend übertragen werden können.

In einer besonders bevorzugten Variante des Verfahrens wird der Messwert vollständig in der Schnellnachricht übertragen. Dies birgt die Möglichkeit, in der Auswerteeinheit, bereits mit der Auswertung der Messwerte zu beginnen, bevor diese durch die gesicherte Nachricht authentifiziert wurden. Indem mit dem Auswerten bereits begonnen wird, werden auch Zeitverluste aufgrund der Übertragung vermieden. Endgültig verarbeitet werden kann der oder die Messwerte allerdings für bestimmte Anwendungen - wie bspw. eine Abrechnung - erst, nachdem sie verifiziert wurden. Für andere Anwendungen, beispielsweise netzdienliche Berechnungen mit einer Vielzahl von Messwerten kann die Schnellnachricht auch vor Empfang der gesicherten Nachrichten in Berechnungen einfließen.

Um die Übertragungsgeschwindigkeiten der Schnellnachrichten zu erhöhen, werden diese bevorzugt auf die Länge von einem Paket begrenzt. Mit dieser Begrenzung ist eine schnelle Weitergabe durch das Netzwerk in der entsprechenden Transportschicht möglich und Verzögerungen in der Bearbeitung und Weiterverarbeitung entfallen.

In einer bevorzugten Weiterbildung schickt die Auswerteeinheit einen Aufforderungsruf an die Vielzahl von Zählern und/oder Kommunikationsadaptern, die wiederum ansprechend auf den empfangenen Aufforderungsruf jeweils aktuelle Messwerte mit Schnellnachrichten und gesicherten Nachrichten versenden. Mit Hilfe des Aufforderungsrufs kann die Auswerteeinheit auch das Zeitintervall, in dem ein Messvorgang erfolgt ist, weiter einschränken. Bei regulärem Ablauf ist der Messwert dann nach dem Aufforderungsruf und vor dem Eingangszeitpunkt der Schnellnachricht gemessen worden.

In einer bevorzugten Weiterbildung wird dieser Umstand auch dazu genutzt, die eingegangene Schnellnachricht zu plausibilisieren. Hierzu wird überprüft, ob der Zeitpunkt des gesendeten Aufforderungsrufs vor dem Zeitpunkt der empfangenen Schnellnachricht liegt. Nur dann kann die Schnellnachricht ansprechend auf den Aufforderungsruf erzeugt worden sein. Der Aufforderungsruf kann hierbei als eine Art Rundruf an die Vielzahl von Zählern und Kommunikationsadaptern ausgebildet sein, oder gezielt für ein oder mehrere Zähler oder Kommunikationsadapter erfolgen. In einer weiteren bevorzugten Ausgestaltung werden die Aufforderungsrufe in periodischen Zeitabständen abgesetzt. Hierdurch entsteht in dem Kommunikationssystem eine zeitliche Struktur als eine Art Takt, in dem Schnellnachrichten übersendet werden.

In einer bevorzugten Weiterbildung kann auch der Aufforderungsruf in eine Schnellnachricht und in eine gesicherte Nachricht umgesetzt werden. Dabei wird die gesicherte Nachricht vor dem Aufforderungsruf vorab gesendet und von den Zählern und/oder Kommunikationsadapter empfangen. Die nachfolgende Schnellnachricht wird dann mit Hilfe des Aufforderungsrufs authentifiziert und der Messvorgang ausgelöst. Vorteilhaft hierbei ist, dass Aufforderungsrufe, die aufgrund von zu transportierenden Daten eine zu große Komplexität besitzen, ebenfalls zeitgenau im Netz übertragen werden können. Der Messvorgang wird erst nach Empfang der Schnellnachricht und deren Authentifizierung ausgeführt.

Wichtig bei der Zerlegung des Aufforderungsrufs in eine Schnellnachricht und in eine gesicherte Nachricht ist auch, dass mit der vorab gesendeten gesicherten Nachricht noch kein Befehl zur Messung gesendet wird, sondern dieser Befehl erst nach Erhalt der Schnellnachricht vollständig vorliegt und ausgeführt werden kann.

In einer bevorzugten Weiterbildung des Verfahrens wird ein Zeitfenster definiert, wobei die Schnellnachrichten innerhalb des Zeitfensters und die gesicherten Nachrichten außerhalb des Zeitfensters übertragen werden. Auf diese Weise kann das Datenvolumen und der zu übertragene Datenverkehr entzerrt werden.

In einer bevorzugten Weiterbildung enthält die Schnellnachricht einen Code oder eine Kennung, die bzw. der einem Prüf- oder Hashwert der gesicherten Nachricht oder eines in dieser enthaltenen Codes entspricht. Auf diese Weise bestätigt die Schnellnachricht als Hashwert der gesicherten Nachricht deren Authentizität. Dies bedeutet auch, dass der Eingangszeitpunkt der Schnellnachricht zuverlässig den Zeitpunkt beschreibt, in dem die gesicherte Nachricht bereits vorlag. Ein Manipulieren oder Ändern der gesicherten Nachricht nach Erstellen der Schnellnachricht scheidet somit aus.

Zur Zuordnung von Schnellnachricht und gesicherten Nachricht nach Eingang der gesicherten Nachrichten ist bevorzugt eine Kennung vorgesehen, die eine eindeutige Zuordnung zwischen Schnellnachricht und gesicherter Nachricht erlaubt, beispielsweise über eine eindeutige Zähleridentifikation.

In einer weiteren bevorzugten Ausgestaltung wird den Messwerten die Empfangszeit der gesicherten Nachricht zugeordnet, wenn die Authentifizierung der Schnellnachricht fehlschlägt. Auf diese Weise können die mit der gesicherten Nachricht übertragenen Daten gleichwohl noch verwendet werden, selbst wenn sie außerhalb des erwarteten Zeitfensters liegen sollten.

Das erfindungsgemäße Verfahren wird nachfolgend an einem Ausführungsbeispiel näher erläutert.
- Fig. 1: zeigt ein erfindungsgemäßes Kommunikationssystem in seinem Aufbau,
- Fig. 2: zeigt in einem zeitlichen Verlauf die auftretenden Ereignisse,
- Fig. 3: zeigt das Zusammenspiel von Schnellnachrichten und gesicherten Nachrichten und
- Fig. 4: zeigt ein Flussdiagramm zu dem erfindungsgemäßen Auswerteverfahren.

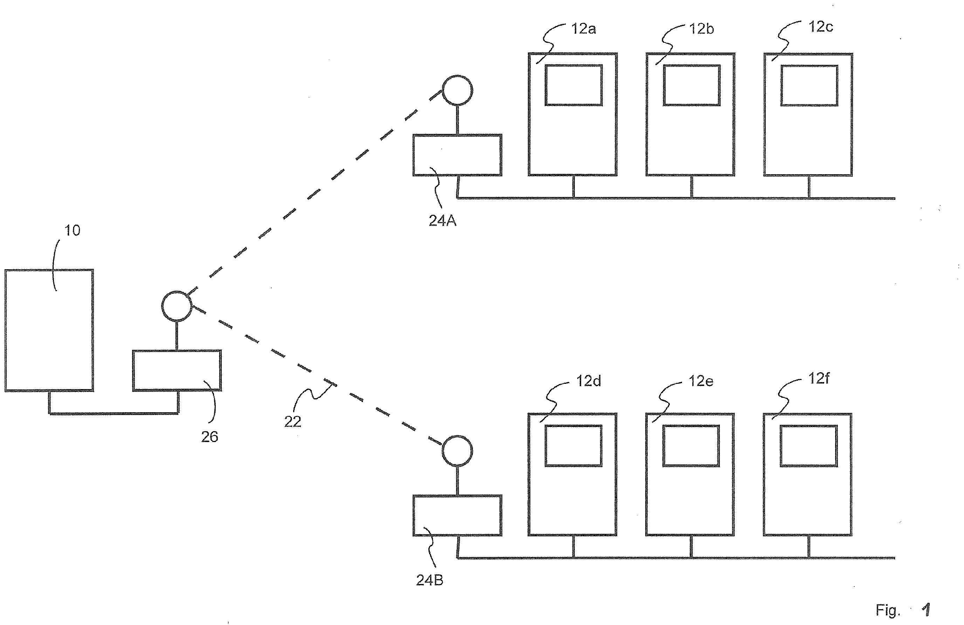

Figur 1 zeigt ein Smart Meter Gateway 10, das Messwerte von einer Vielzahl von Zählern auswertet und verarbeitet. Die Zähler 12a bis f sind dabei gruppenweise Kommunikationsadaptern 24a und 24b zugeordnet. In dem dargestellten Ausführungsbeispiel erfolgt eine leitungsgebundene Verbindung bis zu den Kommunikationsadaptern 24a und 24b. Zwischen dem Kommunikationsadapter 24a, 24b und dem Empfänger 26 besteht eine Funkverbindung 22 mit einem paketvermittelten Datennetz. Als Empfänger 26 auf Seiten des Smart Meter Gateways 10 ist ebenfalls ein Kommunikationsadapter vorgesehen, der die empfangenen Daten empfängt und zur weiteren Verarbeitung weiterleitet. Über das paketvermittelte Funknetzwerk mit seinen Latenzzeiten und seiner beschränkten Bandbreite werden sowohl die Schnellnachrichten, als auch die gesicherten Nachrichten übertragen.

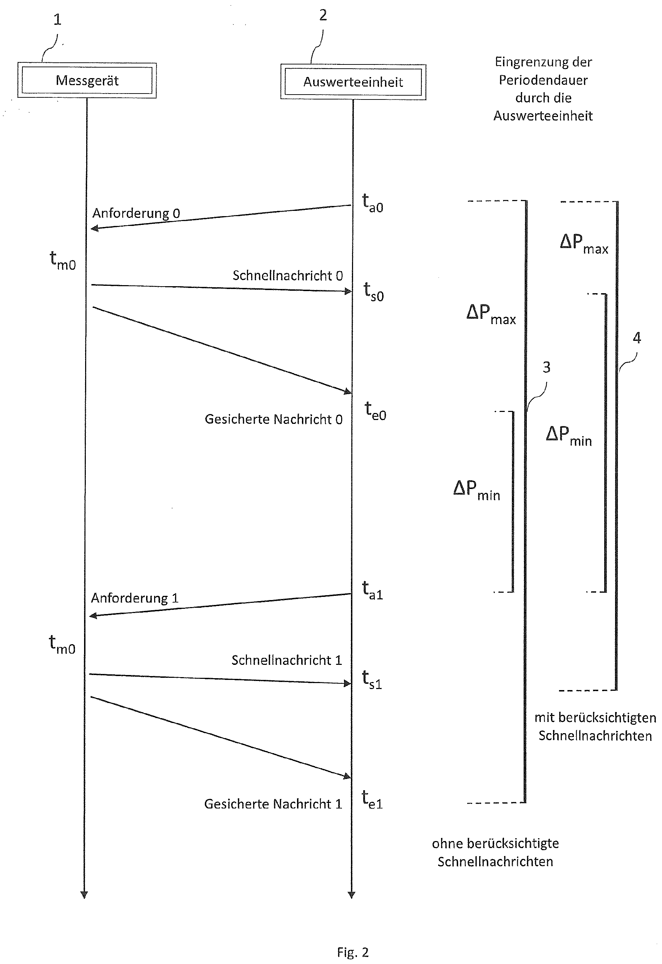

Figur 2 zeigt eine beispielhafte Ausführung des erfindungsgemäßen Verfahrens mit dem Datenaustausch zwischen einem Messgerät 1 und einer Auswerteeinheit 2. Die Auswerteeinheit 2 fordert einen Messwert zum Zeitpunkt Tₐ₀ beim Messgerät an. Dies ist die Anforderung 0.

Das Messgerät erzeugt nach dem Empfang der Anforderung einen Messwert und sieht eine Prüfberechnung zur Sicherung des Messwerts vor Manipulation oder Fehlern bei der Datenübertragung vor. Anschließend erzeugt das Messgerät eine Schnellnachricht, beispielsweise indem der Messwert ohne Sicherung an die Auswerteeinheit übermittelt wird. Beim Empfang durch die Auswerteeinheit zum Zeitpunkt Tₛ₀ speichert die Auswerteeinheit die Schnellnachricht und den Zeitpunkt Tₛ₀ des Empfangs. Die gesicherte Nachricht wird vom Messgerät ebenfalls an die Auswerteeinheit übermittelt, dies kann gleichzeitig oder mit einem zeitlichen Abstand erfolgen. Wie in Figur 2 dargestellt, kann die Situation auftreten, dass die gesicherte Nachricht aufgrund ihrer Größe eine längere Übertragungszeit benötigt. Der Zeitpunkt, an dem die gesicherte Nachricht an der Messeinheit eingeht, beträgt Tₑ₀. Die Auswerteinheit stellt in einem ersten Prüfschritt fest, ob der gesicherte Messwert gültig ist, dazu werden Prüfsummen überprüft und Signaturen und Identifikationsnummern der Messgeräte verifiziert. Wird der gesicherte Messwert als gültig akzeptiert, wird in einem zweiten Prüfschritt ein Vergleich mit der zuvor erhaltenen Schnellnachricht durchgeführt. Kann die Auswerteeinheit durch den Vergleich des gesicherten Messwerts und der Schnellnachricht sicherstellen, dass die Schnellnachricht auf Basis der gesicherten Messwerte berechnet wurden, so zieht die Auswerteeinheit für die Bewertung des Messzeitpunkts im Messgerät den Zeitpunkt der Schnellnachricht und nicht den Zeitpunkt vom Eingang der gesicherten Nachricht heran.

Der genaue Zeitpunkt der Messung in der Auswerteeinheit ist dabei weiterhin nicht bekannt, jedoch lässt sich der Zeitpunkt jetzt genauer auf ein Zeitintervall zwischen Aussenden der Aufforderung und Erhalt der Schnellnachricht beschränken (Tₐ₀-Tₛ₀).

Bei aufeinanderfolgenden Messwerterfassungen führt die genaue Einschränkung des Zeitpunkts zu Beginn und zum Ende einer Messperiode auch zu einer genaueren Eingrenzung der Lage der Messperiode. Die rechts an der Zeitachse der Auswerteeinheit dargestellte Zeitskala 3 zeigt mit ΔPₘₐₓ die maximale mögliche Länge der Messperiode, für die die Messwerte ermittelt wurden. Die Länge ΔPₘₐₓ ergibt sich hierbei aus den Zeitpunkten des Aussendens des ersten Anforderungssignals und dem Zeitpunkt Tₑ₁ zum Empfang der übernächsten gesicherten Nachricht. Die Länge ΔPₘᵢₙ ergibt sich aus dem Zeitpunkt zwischen Erhalt des ersten gesicherten Messwerts Tₑ₀ und dem Zeitpunkt Tₐ₁ der Anforderung des zweiten Messwerts.

In einer bevorzugten Ausführung wird die Schnellnachricht aus der gesicherten Nachricht gewonnen, beispielsweise indem die ersten Endzeichen der gesicherten Nachricht als Schnellnachricht übertragen und die gesicherten Messwerte ab Zeichen n+1 übertragen werden. Nach Erhalt der Schnellnachricht in der Auswerteeinheit kann die Schnellnachricht durch Ergänzen der weiteren Zeichen der gesicherten Messwerte wieder hergestellt werden. Die in der gesicherten Nachricht enthaltenen Prüfzahlen ermöglichen der Auswerteeinheit, nunmehr in einem Schritt die vervollständigten gesicherten Messwerte auf Unverfälschtheit hin zu überprüfen.

Bei dem erfindungsgemäßen Verfahren ist bevorzugt die Schnellnachricht derart konfiguriert, dass sie sich innerhalb einer Paketlänge der Übertragungsschicht übermitteln lässt und damit Verzögerungen, die durch unterschiedliche Reihung und Übertragungsfehler bei den einzelnen Paketen entstehen können, vermieden werden. Insbesondere ist bei der Länge der Pakete darauf zu achten, dass die Paketlänge der relevanten Übertragungsschicht gewählt wird, also der Übertragungsschicht im Netzwerk entsprechend.

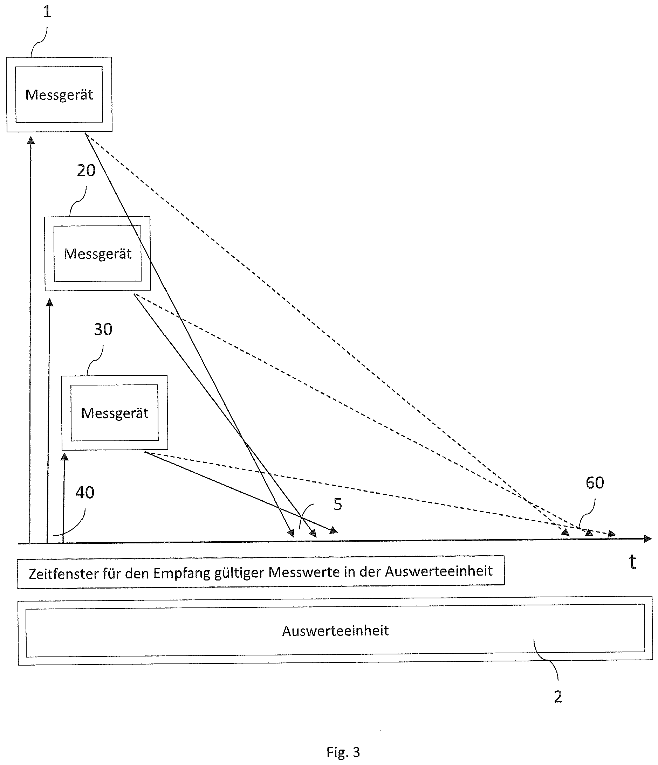

Figur 3 zeigt eine Vielzahl von Messgeräten 1, 20, 30, die zeitgleich ihre Messwerte aussenden. Ausgehend von nahezu zeitgleichen Aufforderungsrufen 40 für die jeweiligen Messgeräte beginnen diese mit dem Erfassen des Messwerts und der Berechnung der gesicherten Nachricht. Die Schnellnachrichten 5 der Messgeräte 1, 20, 30 treffen nacheinander bei der Auswerteeinheit 2 ein. Diese Signale liegen alle innerhalb des oder der Zeitfenster für den Empfang der Messwerte in der Auswerteeinheit. Die gesicherten Nachrichten 60 benötigen eine größere Übertragungszeit und treffen später bei der Auswerteeinheit ein. Die Auswerteeinheit kann durch eine Prüfung der erhaltenen Schnellnachrichten und die später empfangenen gesicherten Nachrichten den Empfangszeitpunkt auf den Empfangszeitpunkt der Schnellnachricht zurückdatieren, sodass alle Daten vollständig und zuverlässig innerhalb des oder der Zeitfenster erfasst wurden.

In Messsystemen, bei denen auch die Anforderung der Messwerte durch komplexere Protokolle vorgeschrieben ist, beispielsweise um die Zuordnung der Messung oder genaue Angaben zu den zu erfassenden Messwerten mit anzugeben, kann mit dem Verfahren der Schnellnachricht auch die Anforderung der Messdaten zeitlich genauere eingegrenzt werden. Hierzu wird zunächst außerhalb des in Figur 3 dargestellten Zeitfensters eine vollständige Anforderung an die Zähler übertragen und mit Aussenden einer kürzeren Schnellnachricht, deren Länge vorzugsweise ebenfalls kürzer als ein Paket der Übertragungsschicht ist, wird die Messung im Zähler abgeschlossen. Auch hier trägt die Schnellnachricht dazu bei, der Auswerteeinheit die Bestimmung des möglichen Zeitpunkts der Ermittlung des Messwerts genauer festzulegen und den zeitlichen Abstand zwischen Anforderung und Beginn der tatsächlichen Messung zu verkürzen, da die Datenübermittlung zum Messgerät schneller erfolgen kann.

In unidirektional arbeitenden Messsystemen verringert die Aussendung der Schnellnachricht die zu beachtenden Latenzzeiten für die Übertragung. Besonders vorteilhaft wirkt das Verfahren hier, wenn die Schnellnachrichten mit einer höheren Priorität und die gesicherten Messwerte mit einer niedrigeren Priorität übermittelt werden. Fehlerhafte Übertragung des gesicherten Messwerts können wiederholt werden. Bei korrekt empfangenen Schnellnachrichten wirkt sich dies nicht negativ auf die Bestimmung der Messzeitpunkte aus.

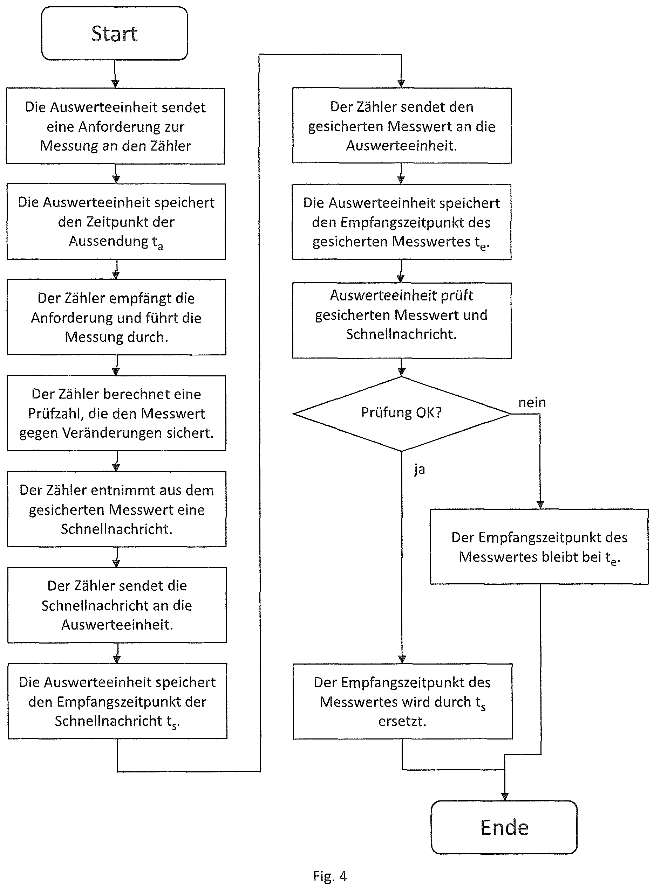

Figur 4 zeigt in einem Flussdiagramm den Ablauf des erfindungsgemäßen Verfahrens. Nach Start des Verfahrens sendet die Auswerteeinheit eine Anforderung zur Messung an die Zähler. Die Anforderung kann hierbei zählerspezifisch sein oder als Rundruf an alle Zähler ausgestaltet sein. Die Auswerteinheit speichert den Zeitpunkt der Aussendung Tₐ für die Anforderung. Nachfolgend empfängt der Zähler die Anforderung und führt die Messung durch. Der Zähler berechnet eine Prüfsumme, die den Messwert gegen Veränderungen sichert. Der Zähler entnimmt aus der gesicherten Nachricht eine Schnellnachricht und sendet nachfolgend die Schnellnachricht an die Auswerteeinheit. Die Schnellnachricht besitzt hierbei die Länge eines Pakets in der entsprechenden Netzwerkübertragungsschicht. Die Auswerteeinheit speichert den Empfangszeitpunkt der Schnellnachricht. Der Zähler sendet ebenfalls die gesicherte Nachricht mit dem gesicherten Messwert an die Auswerteeinheit. Hier kann das Aussenden zeitlich verzögert oder annähernd gleichzeitig mit der Schnellnachricht erfolgen. Die Auswerteeinheit speichert den Empfangszeitpunkt des gesicherten Messwerts Tₑ. Die Auswerteeinheit prüft nun die gesicherte Nachricht und die Schnellnachricht. Erfolgt die Prüfung erfolgreich, so wird der Empfangszeitpunkt des Messwerts durch Tₛ, also den Empfangszeitpunkt der Schnellnachricht, ersetzt. Erfolgt die Prüfung nicht zur Zufriedenheit, so bleibt der Empfangszeitpunkt der gesicherten Nachricht und damit des Messwerts der Zeitpunkt Tₑ, in dem die gesicherte Nachricht eingegangen ist. Damit schließt das Verfahren.

### Bezugszeichenliste

- 0: Anforderung
- 1: Messgerät
- 2: Auswerteeinheit
- 3: Zeitskala
- 5: Schnellnachrichten
- 10: Smart Meter Gateway
- 12a-f: Zähler
- 20: Messgerät
- 22: Funkverbindung
- 24a, 24b: Kommunikationsadapter
- 26: Empfänger
- 30: Messgerät
- 40: Aufforderungsrufe
- 60: gesicherte Nachrichten

## Patentansprüche

1. Verfahren zur Messwerterfassung in einem Messsystem mit einer Vielzahl von Zählern (12a-f) und Kommunikationsadaptern (24a, 24b), die jeweils einen oder mehrere Messwerte an eine Auswerteeinheit (2) übertragen, **gekennzeichnet durch**:
• der zu übertragene Messwert wird vor einem Sendevorgang in eine Schnellnachricht und in eine gesicherte Nachricht umgesetzt, wobei die gesicherte Nachricht die Schnellnachricht authentifiziert und die Schnellnachricht und/oder die gesicherte Nachricht den Messwert enthalten,
• die Schnellnachricht wird an die Auswerteeinheit (2) übermittelt und der Empfangszeitpunkt gespeichert,
• die gesicherte Nachricht wird an die Auswerteeinheit (2) übertragen,
• die Schnellnachricht wird mit der gesicherten Nachricht authentifiziert, der Messwert aus Schnellnachricht und/oder gesicherter Nachricht gewonnen und der Empfangszeitpunkt der Schnellnachricht wird dem gewonnenen Messwert zugeordnet.

2. Verfahren nach Anspruch 1, **dadurch gekennzeichnet, dass** der Messwert vollständig in der Schnellnachricht enthalten ist.

3. Verfahren nach Anspruch 1 oder 2, **dadurch gekennzeichnet, dass** die Schnellnachricht eine Länge von einem Paket aufweist.

4. Verfahren nach einem der Ansprüche 1 bis 3, **dadurch gekennzeichnet, dass** die Auswerteeinheit (2) einen Aufforderungsruf an mindestens einen der Zähler (12a-f) und/oder Kommunikationsadapter (24a, 24b) schickt, die wiederum ansprechend auf den empfangenen Aufforderungsruf jeweils aktuelle Messwerte mit Schnellnachricht und gesicherter Nachricht senden.

5. Verfahren nach einem der Ansprüche 1 bis 4, **dadurch gekennzeichnet, dass** die Auswerteeinheit (2) den Zeitpunkt des gesendeten Aufforderungsrufs speichert und mit dem Zeitpunkt der empfangenen Schnellnachricht vergleicht.

6. Verfahren nach Anspruch 4 oder 5, **dadurch gekennzeichnet, dass** der Aufforderungsruf ebenfalls in eine Schnellnachricht und in eine gesicherte Nachricht umgesetzt wird, wobei die gesicherte Nachricht zu dem Aufforderungsruf vorab gesendet wird und die nachfolgende Schnellnachricht den Messvorgang auslöst.

7. Verfahren nach einem der Ansprüche 1 bis 6, **dadurch gekennzeichnet, dass** der Aufforderungsruf in periodischen Zeitabständen abgesetzt wird.

8. Verfahren nach einem der Ansprüche 1 bis 7, **dadurch gekennzeichnet, dass** ein Zeitfenster definiert ist, wobei die Schnellnachrichten (5) innerhalb des Zeitfensters und die gesicherten Nachrichten außerhalb des Zeitfensters übertragen werden.

9. Verfahren nach einem der Ansprüche 1 bis 8, **dadurch gekennzeichnet, dass** die Schnellnachricht einen Code enthält, der einen Prüf- oder Hashwert der gesicherten Nachricht oder eines in dieser enthaltenen Codes entspricht.

10. Verfahren nach einem der Ansprüche 1 bis 9, **dadurch gekennzeichnet, dass** die gesicherte Nachricht eine Kennung enthält, die eine Zuordnung zu ihrer Schnellnachricht erlaubt.

11. Verfahren nach einem der Ansprüche 1 bis 10, **dadurch gekennzeichnet, dass** wenn die Authentifizierung der Schnellnachricht fehlschlägt, den Messwerten die Empfangszeit der gesicherten Nachricht zugeordnet wird.

## Claims

1. Method for recording measured values in a measuring system having a plurality of meters (12a-f) and communication adapters (24a, 24b) which each transmit one or more measured values to an evaluation unit (2), **characterized by**:
• the measured value to be transmitted is converted before a transmission operation into a quick message and into a secured message, wherein the secured message authenticates the quick message and the quick message and/or the secured message contain the measured value,
• the quick message is transmitted to the evaluation unit (2) and the time of receipt is recorded,
• the secured message is transmitted to the evaluation unit (2),
• the quick message is authenticated with the secured message, the measured value is obtained from the quick message and/or the secured message and the time of receipt of the quick message is assigned to the obtained measured value.

2. Method according to claim 1, **characterized in that** the measured value is entirely contained in the quick message.

3. Method according to claim 1 or 2, **characterized in that** the quick message has a length of one packet.

4. Method according to one of the claims 1 to 3, **characterized in that** the evaluation unit (2) sends a request call to at least one of the meters (12a-f) and/or communication adapters (24a, 24b), which in turn send, in response to the received request call, current measured values with quick message and secured message.

5. Method according to one of claims 1 to 4, **characterized in that** the evaluation unit (2) stores the time of the transmitted request call and compares it with the time of the received quick message.

6. Method according to claim 4 or 5, **characterized in that** the request call is likewise converted into a quick message and into a secured message, the secured message of the request call being sent in advance and the subsequent quick message triggering the measuring process.

7. Method according to one of claims 1 to 6, **characterized in that** the request call is dispatched at periodic time intervals.

8. A method according to any one of claims 1 to 7, **characterized in that** a time window is defined, wherein the quick messages (5) are transmitted within the time window and the secured messages are transmitted outside of the time window.

9. Method according to any of claims 1 to 8, **characterized in that** the quick message contains a code which corresponds to a check or hash value of the secured message or a code contained therein.

10. Method according to one of claims 1 to 9, **characterized in that** the secured message contains an identifier which permits allocation to its quick message.

11. Method according to one of claims 1 to 10, **characterized in that** if the authentication of the quick message fails, the time of receipt of the secured message is assigned to the measured values.

## Revendications

1. Procédé de saisie de valeurs mesurées dans un système de mesure avec une pluralité de compteurs (12a-f) et d'adaptateurs de communication (24a, 24b) transmettant respectivement une ou plusieurs valeurs mesurées à une unité d'évaluation (2), **caractérisé en ce que** :
• la valeur mesurée à transmettre est convertie en un message rapide et en un message sécurisé avant la procédure d'envoi, le message sécurisé permettant d'authentifier le message rapide et le message rapide et/ou le message sécurisé contenant la valeur mesurée,
• le message rapide est transféré à l'unité d'évaluation (2) et le moment de réception est enregistré,
• le message sécurisé est transmis à l'unité d'évaluation (2),
• le message rapide est authentifié avec le message sécurisé, la valeur mesurée est obtenue à partir du message rapide et/ou du message sécurisé et le moment de réception du message rapide est attribué à la valeur mesurée obtenue.

2. Procédé selon la revendication 1, **caractérisé en ce que** la valeur mesurée est contenue entièrement dans le message rapide.

3. Procédé selon la revendication 1 ou 2, **caractérisé en ce que** le message rapide présente une longueur d'un paquet.

4. Procédé selon l'une des revendications 1 à 3, **caractérisé en ce que** l'unité d'évaluation (2) envoie un appel de requête à l'un au moins des compteurs (12a-f) et/ou à l'adaptateurs de communication (24a, 24b), lequel envoie à son tour des valeurs mesurées respectivement actuelles avec le message rapide et le message sécurisé en réponse à l'appel de requête reçu.

5. Procédé selon l'une des revendications 1 à 4, **caractérisé en ce que** l'unité d'évaluation (2) enregistre le moment de l'envoi de l'appel de requête et le compare avec le moment de la réception du message rapide.

6. Procédé selon la revendication 4 ou 5, **caractérisé en ce que** l'appel de requête est également converti en un message rapide et en un message sécurisé, dans lequel le message sécurisé est envoyé préalablement à l'appel de requête et le message rapide consécutif déclenche une opération de mesure.

7. Procédé selon l'une des revendications 1 à 6, **caractérisé en ce que** l'appel de requête est émis à des intervalles de temps périodiques.

8. Procédé selon l'une des revendications 1 à 7, **caractérisé en ce qu'**une fenêtre temporelle est définie, dans lequel les messages rapides (5) sont transmis dans la fenêtre temporelle et les messages sécurisés en dehors de la fenêtre temporelle.

9. Procédé selon l'une des revendications 1 à 8, **caractérisé en ce que** le message rapide contient un code correspondant à une valeur de vérification ou de hachage du message sécurisé ou d'un code contenu dans celui-ci.

10. Procédé selon l'une des revendications 1 à 9, **caractérisé en ce que** le message sécurisé contient un identifiant permettant une attribution à son message rapide.

11. Procédé selon l'une des revendications 1 à 10, **caractérisé en ce que** lorsque l'authentification du message rapide échoue, le temps de réception du message sécurisé est attribué aux valeurs mesurées.
